(19) Europäisches Patentamt
European Patent Office
Office européen des brevets

(11) **EP 0 751 865 B2**

(12) **NEUE EUROPÄISCHE PATENTSCHRIFT**

(45) Veröffentlichungstag und Bekanntmachung des Hinweises auf die Entscheidung über den Einspruch:
**14.07.2004   Patentblatt 2004/29**

(45) Hinweis auf die Patenterteilung:
**13.05.1998   Patentblatt 1998/20**

(21) Anmeldenummer: **95913046.9**

(22) Anmeldetag: **23.03.1995**

(51) Int Cl.[7]: **B29C 65/16**

(86) Internationale Anmeldenummer:
**PCT/DE1995/000394**

(87) Internationale Veröffentlichungsnummer:
**WO 1995/026869 (12.10.1995 Gazette 1995/43)**

(54) **WERKSTÜCK AUS KUNSTSTOFF UND HERSTELLUNGSVERFAHREN FÜR EIN DERARTIGES WERKSTÜCK**

PLASTIC WORKPIECE AND PROCESS FOR PRODUCING IT

PIECE EN PLASTIQUE ET PROCEDE POUR SA FABRICATION

(84) Benannte Vertragsstaaten:
**AT BE CH DE ES FR GB IT LI NL SE**

(30) Priorität: **31.03.1994   DE 4411251**

(43) Veröffentlichungstag der Anmeldung:
**08.01.1997   Patentblatt 1997/02**

(73) Patentinhaber: **Marquardt GmbH**
**78604 Rietheim-Weilheim (DE)**

(72) Erfinder: **MÜLLICH, Vitus**
**D-78604 Rietheim-Weilheim (DE)**

(74) Vertreter: **Patentanwälte**
**Eisele, Otten, Roth & Dobler**
**Karlstrasse 8**
**88212 Ravensburg (DE)**

(56) Entgegenhaltungen:
| | |
|---|---|
| **EP-A- 0 126 787** | **EP-A- 0 159 169** |
| **EP-A- 0 288 884** | **EP-A- 0 413 734** |
| **EP-A- 0 483 569** | **WO-A-89/10231** |
| **WO-A-89/10832** | **WO-A-94/22661** |
| **DE-A- 1 479 239** | **DE-A- 1 540 991** |
| **DE-A- 1 629 225** | **DE-A- 2 261 388** |
| **DE-A- 3 714 504** | **DE-A- 3 910 790** |
| **DE-A- 4 225 679** | **DE-A- 4 409 255** |
| **DE-A- 4 432 081** | **DE-C- 3 813 570** |
| **DE-U- 9 015 782** | **FR-A- 1 506 163** |
| **GB-A- 1 051 397** | **GB-A- 1 316 398** |
| **GB-A- 2 271 312** | **GB-A- 2 276 584** |
| **US-A- 3 424 890** | **US-A- 3 477 194** |
| **US-A- 3 769 117** | **US-A- 3 960 624** |
| **US-A- 4 069 080** | **US-A- 4 636 609** |
| **US-A- 5 279 693** | |

- **Kunststoffe 82 (1992) 8, S. 655-658**
- **Research Disclosure (1981), Sept. Ab 209, Emsworth 613 Article 20941, pages 358-359**
- **Prospect Sammelmappe Filtron Seite 1-4**
- **Peter Gregory: "High-Technology Applications of Organic Colorants, pages 215 and 251-253**
- **Dubbel, Taschenbuch für den Maschinenbau, Seiten 354-356**
- **Dissertat D82, TH Aachen, 1990, R.U. Klein, Seiten 23-33, 37-39, 55,56, 99 und 100**
- **Leichtverständliche Einführung in die Kunststoffchemi, 1979, Sieten 65 und 135**
- **Gebrauchsanweisung Videorecorder Telefunken A 9302, Seiten 5 und 19**

**Beschreibung**

Die Erfindung betrifft ein Werkstück, insbesondere ein Gehäuse für einen elektrischen Schalter, nach dem Oberbegriff des Patentanspruchs 1 sowie ein Verfahren zum Verschweissen von Werkstückteilen nach dem Oberbegriff des Patentanspruchs 7.

Aus Kunststoff bestehende Gehäuse für elektrische Schalter dienen zur Aufnahme der elektrischen Bauteile, wie Festkontakte, Schaltkontakte, usw. sowie gegebenenfalls von weiteren Komponenten. Die Gehäuse bestehen im allgemeinen aus mehreren Gehäuseteilen mit in der Regel komplexer räumlicher Gestalt. Die Gehäuseteile werden bei der Montage des Schalters zusammengesetzt, wobei häufig eine feste Verbindung zwischen den Gehäuseteilen herzustellen ist. Diese Verbindung muß der Kontur der Gehäuseteile angepaßt sein und kann somit eine räumlich dreidimensional verlaufende Ausbildung besitzen.

Es ist bekannt, insbesondere wenn die Gehäuse hermetisch nach außen verschlossen sein sollen, die Gehäuseteile mittels Ultraschallschweissen miteinander zu verbinden. Nachteilig ist dabei, daß aufgrund der Ultraschallschwingungen Lötverbindungen an den elektrischen Bauteilen sowie die elektrischen Bauteile selbst zerstört werden können, womit letztendlich der Schalter unbrauchbar wird. Es besteht somit der Bedarf für ein die elektrischen Bauteile nicht beeinträchtigendes Verfahren zum Verschweissen der Gehäuseteile von elektrischen Schaltern.

Aus der DE-OS 36 21 030 ist es bekannt, Kunststoff-Folien durch Einwirkung von Laserstrahlen miteinander zu verschweissen. Dazu werden die Kunststoff-Folien plan aufeinander gelegt. Anschließend tritt ein fokussierter Laserstrahl durch die Folien hindurch, wobei die Folien in der Fügezone derart erwärmt werden, daß sie in einen schmelzflüssigen Zustand gelangen, so daß sie nach Abkühlung in der Fügezone miteinander verbunden sind.

Bei Folien handelt es sich um dünne Teile, so daß eine Erwärmung beim Durchtritt der Laserstrahlen in der gesamten Fügezone möglich ist. Dadurch gelingt in der Regel eine akzeptable Schweißverbindung zwischen den Folien. Bei dickeren Werkstücken, wie bei Gehäusen von elektrischen Schaltern, ist jedoch mit dem bekannten Fügeverfahren nur eine oberflächliche Erwärmung des Werkstücks möglich, womit keine brauchbare Schweißverbindung zwischen zwei Werkstückteilen erzielbar ist. Insbesondere ist aus konstruktiven Gründen bei Gehäuseteilen von elektrischen Schaltern die Fügezone häufig an der Innenseite des Gehäuses angeordnet. Eine derartige innenliegende Schweißverbindung ist offensichtlich mit dem bekannten Fügeverfahren nicht herstellbar.

Weiter ist aus der EP-A2-0 159 169 ein Verfahren zum Verschweißen von Platten aus Kunststoff mittels Laserstrahlen bekannt. Bei diesem Verfahren wird auf einer ersten Platte, die durch Verwendung eines Additivs im Kunststoff absorbierend für den Laserstrahl ausgebildet ist, eine zweite Platte angeordnet. Als Additiv wird ein schwarzer Farbstoff, vorwiegend Ruß, verwendet. Der Kunststoff der zweiten Platte enthält keine Additive, so daß die zweite Platte für den Laserstrahl weitgehend transparent ist. Anschließend wirkt ein Laserstrahl auf die zweite Platte ein, wobei der Laserstrahl die zweite Platte durchdringt und in der ersten Platte absorbiert wird, so daß die aneinander angrenzenden Kontaktflächen der beiden Platten aufschmelzen und bei der anschließenden Abkühlung sich miteinander verbinden.

Nachteilig bei diesem Verfahren ist, daß die zweite Platte kein Additiv enthalten darf und in einem ungefärbten, milchig-weißen Zustand vorliegt, während die erste Platte mit einem schwarzen Farbstoff eingefärbt ist. Die dadurch hergestellten Werkstücke bestehen folglich aus Teilen mit stark unterschiedlicher Farbe, so daß der optische Gesamteindruck beeinträchtigt ist. Gerade bei Gehäusen von elektrischen Schaltern wird jedoch gewünscht, daß das gesamte Gehäuse einen homogenen optischen Eindruck, insbesondere im Hinblick auf die Farbe, besitzt. Zudem handelt es sich bei den in der Veröffentlichungsschrift gezeigten Platten um ebene Gebilde, die an einer planen Fläche miteinander verschweißt werden. Gehäuseteile, insbesondere solche für elektrische Schalter o. dgl., besitzen in der Regel jedoch komplizierte Geometrien, wobei die Fügezone der miteinander zu verbindenden Teile dieser Geometrie folgen muß und daher nicht auf eine Ebene beschränkt ist. Eine Anregung zur Herstellung komplexer, räumlich verlaufender Fügezonen gibt die Veröffentlichungsschrift nicht. Das bekannte Verfahren ist daher zum Verschweissen von Gehäuseteilen, insbesondere für elektrische Schalter, nicht geeignet.

Aus der EP-A1-0 483 569 ist schließlich eine Vorrichtung zum Verschweissen eines Kunststoff-Deckels an einem für die Aufnahme von Nahrungsmitteln dienenden Kunststoff-Becher mittels Laserstrahlen bekannt. Der Deckel ist an einem flanschartigen Rand des Kunststoff-Bechers aufgelegt und ist in diesem Bereich für die Laserstrahlen transparent ausgebildet. Zwischen dem Deckel und dem Becher befindet sich am flanschartigen Rand eine Schicht, die für die Laserstrahlen absorbierend ist. In dieser absorbierenden Schicht wird die Energie der Laserstrahlen in Wärme umgewandelt, so daß der Kunststoff in Bereichen des Deckels und des Bechers teilweise aufschmilzt, wobei der Deckel und der flanschartige Rand miteinander verschweissen.

Die nähere Ausbildung des transparenten Bereichs und der absorbierenden Schicht bleiben offen, so daß auch hier die bereits zu der EP-A2-0 159 169 beschriebenen Nachteile auftreten. Insbesondere ist hervorzuheben, daß es sich bei einem Kunststoff-Becher zwar um ein räumliches Werkstück handelt, die Schweißnaht zwischen dem Deckel und dem Becher hier jedoch wiederum in einem eben oder plan ausgebildeten Randbereich verläuft. Somit gibt auch diese Veröffentlichungsschrift keine Anregung zur Ausgestaltung und Herstellung eines komplexen, insbesondere räumlich verlaufende Fügezonen besitzenden Werkstücks.

Weitere Druckschriften, die Einzelheiten von Werkstücken aus miteinander verschweißten Werkstückteilen zeigen, sind im folgenden beschrieben. Gemeinsam ist diesen Druckschriften, daß deren Offenbarung bezüglich der Verwendung jeweils eines für Laserstrahlen transparenten und absorbierenden Werkstückteils nicht über die Offenbarung der EP-A1-0 483 569 hinausgeht.

So betrifft die GB-A-1 051 397 das Verschweissen von zwei Halbleiter-Scheiben mittels optischer Strahlung, wobei die beiden Halbleiter-Scheiben aus unterschiedlichen Materialien mit verschiedenen Absorptionskoeffizienten für die Strahlung bestehen.

Die optische Strahlung durchdringt zunächst das Material mit geringerem Absorptionskoeffizienten und schmilzt die beiden Materialien an der Verbindungsstelle auf, so daß dort eine Verschweissung eintritt. Die beiden Materialien können während der Verschweissung miteinander verpreßt werden.

In der US-A-5 279 693 ist ein Verfahren zum Verschweissen eines aus thermoplastischen Material bestehenden Klettverschlusses mit einer thermoplastischen Bahn mittels Laserstrahlen beschrieben. Der zwischen zwei Bahnen befindliche Klettverschluß besitzt einen niedrigeren Erweichungspunkt als die Bahnen, so daß die nach Durchqueren einer Bahn geringere Energie des Laserstrahls noch zur Erwärmung des Klettverschlusses ausreicht.

Die FR-A-1 506 163 betrifft ein Verfahren zum Verschweissen von thermoplastischen Schicht-Materialien mittels Laserstrahlen. An der Verbindungsstelle befindet sich eine aus Farbstoff bestehende zusätzliche Schicht, so daß dort eine erhöhte Absorption der Laserstrahlen auftritt. Dadurch wird der zu dieser Schicht benachbarte Bereich durch Wärmeleitung erwärmt, womit die Schweißverbindung hergestellt wird.

In der US-A-3 477 194 ist eine aus Karton und thermoplastischen Deckmaterialien bestehende Warenverpackung gezeigt. Der Karton wird mit einer strahlungsabsorbierenden, beispielsweise kohlenstoffhaltigen Farbe an den zu verschweissenden Stellen bedruckt. Anschließend wird der Karton mit einer ersten thermoplastischen Folie überzogen, die Ware eingelegt und anschließend mit einer zweiten thermoplastischen Folie abgedeckt.

Eingestrahlte Infrarot-Strahlung, die beispielsweise von einem Laser erzeugt wird, wird von der Farbe absorbiert und erwärmt die Folien, so daß eine Verschweissung der Folien eintritt.

Die DE-U-9 015 782 zeigt eine Maschine zum Verschließen einer Dose mit einem Deckel aus Blech. Der Dosenrand ist mit dem Deckelrand über eine umlaufende Schweißnaht an einem falzartigen Steg verbunden. Die Schweißnaht wird mittels eines Laserstrahls erzeugt.

Aus der WO 89/10832 ist ein Verfahren zum Verschweissen von thermoplastischen Materialien mittels Druck und Wärme bekannt. Bei diesem Verfahren wird ein Werkzeug, das einen transparenten Bereich zur Zuführung von Infrarot-Strahlung besitzt, an der zu verschweissenden Stelle unter Druckeinwirkung angelegt. Eine auf die Materialien aufgelegte oder zwischen den Materialien befindliche Folie ist strahlungsabsorbierend ausgebildet, so daß die dort erzeugte Wärme die Materialien durch Wärmeleitung für die Verschweissung erwärmt.

Die EP-A1-0 288 884 zeigt verschiedene Ausgestaltungen für eine Stumpf-Schweißnaht bei der Laserschweissung von Metallblechen oder Kunststofftafeln. Bei diesen Ausgestaltungen sind die Flanken für die Stumpf-Schweißnaht nut- und federartig mit unterschiedlichen Querschnitten profiliert.

Schließlich ist aus der US-A-3 769 117 das Verschweissen eines Tubenkopfes mit einem Tubenkörper aus Kunststoff mittels Laserstrahlen bekannt. Die Tube wird während des Verschweissens gedreht, wobei gleichzeitig mit einer Rolle ein Preßdruck auf die Schweißnaht ausgeübt wird.

Ausgehend von der EP-A1-0 483 569 liegt der Erfindung die Aufgabe zugrunde, ein aus mehreren Werkstückteilen bestehendes Werkstück derart auszugestalten, daß die Werkstückteile, insbesondere an einer innenliegenden, dreidimensional räumlich verlaufenden Fügezone, mittels Laserstrahlen miteinander verbindbar sind sowie ein Verfahren zur Herstellung eines derartigen Werkstückes anzugeben.

Diese Aufgabe wird bei einem gattungsgemäßen Werkstück durch die kennzeichnenden Merkmale des Anspruchs 1 sowie bei einem gattungsgemäßen Verfahren durch die kennzeichnenden Merkmale des Anspruchs 7 gelöst.

Die Erfindung basiert auf dem Gedanken, daß die Laserstrahlen das der Laserstrahlenquelle nächstliegende erste Werkstückteil im wesentlichen ungehindert durchdringen und im zweiten Werkstückteil weitgehend absorbiert werden, wodurch ein Aufschmelzen der beiden Werkstückteile an der Fügezone erreicht wird. Dazu ist zumindestens in den von den Laserstrahlen berührten Bereichen das erste Werkstückteil für die Laserstrahlen weitgehend transmittierend und das zweite Werkstückteil weitgehend absorbierend durch einen entsprechenden Anteil an Additiven ausgebildet. Zu diesem Zweck besitzt das erste Werkstückteil einen im Vergleich zum zweiten Werkstückteil hohen Transmissionskoeffizienten und einen niedrigen Absorptionskoeffizienten, d.h. das erste Werkstückteil besitzt einen größeren Transmissionskoeffizienten als das zweite Werkstückteil und das zweite Werkstückteil besitzt einen größeren Absorptionskoeffizienten als das erste Werkstückteil. Da jedoch beide Werkstückteile Additive enthalten, sind diese für Lichtstrahlen in dem für das menschliche Auge sichtbaren Bereich undurchlässig, womit vorteilhafterweise ein im wesentlichen homogener optischer Eindruck resultiert. Die einzelnen Werkstückteile sind nach der Verschweissung vom menschlichen Auge im wesentlichen nicht mehr unterscheidbar.

Weitere Ausgestaltungen der Erfindung sind Gegenstand der Unteransprüche.

Insbesondere kann das zweite Werkstückteil derart an der Oberfläche absorbierend ausgestaltet sein, daß die Laserstrahlen lediglich eine kleine Distanz in das zweite Werkstückteil eindringen. Dadurch werden selbst bei kleinen Laserleistungen gute Resultate beim Verschweissen erzielt. Der das Maß an Transmission und an Absorption bestimmende Transmissions- und Absorptionskoeffizient für die beiden Werkstückteile kann durch Zusatzstoffe im Kunststoff, beispielsweise Farbstoffpigmente eingestellt werden. Es hat sich als günstig herausgestellt, wenn das erste Werkstückteil auf eine Transmission T größer als 60% und Absorption A kleiner als 30% sowie das zweite Werkstückteil auf eine Absorption A größer als 90% und insbesondere eine vernachlässigbar geringe Transmission T eingestellt ist.

Die Fügezone kann insbesondere bei komplex ausgestalteten Werkstücken dreidimensional räumlich sowie auch im Inneren des Werkstücks verlaufen, so daß die Werkstückteile dem jeweiligen Verwendungszweck optimal anpaßbar sind. Zur Erzielung einer guten Abdichtung des Inneren des Werkstückes können die aneinander grenzenden Wände der Werkstückteile überlappend ausgebildet sein, wobei eine sektorale Verschweissung in der Fügezone mittels Laserstrahlen an den kritischen Bereichen, wie Ecken, Durchführungen o. dgl. genügen kann. Die miteinander zu verbindenden werkstückteile können in der Fügezone einen überlappenden Stoß in verschiedenster Ausgestaltung aufweisen.

Die Güte der Fügezone läßt sich durch Druckeinwirkung auf die Fügezone bis zum Erkalten noch steigern. Die Druckeinwirkung wird bevorzugt benachbart zum Fokus der Laserstrahlen vorgenommen, so daß das Eindringen der Laserstrahlen in das Werkstück nicht behindert wird. Es ist jedoch auch denkbar, für den Laserstrahl transparente Spannmittel zu verwenden, so daß die Druckeinwirkung auch direkt im Einwirkungsbereich der Laserstrahlen vorgenommen werden kann. Bevorzugterweise wird die Druckeinwirkung der Bewegung der Laserstrahlen entlang der Fügezone nachgeführt. Diese Bewegung der Laserstrahlen läßt sich auf einfache Weise auch räumlich programmierbar durchführen, beispielsweise indem ein Roboter oder Mehrachsen-Handhabungsgerät verwendet wird. Insbesondere sektorale Verschweissungen an einzelnen Stellen des Werkstücks sind somit auf einfache Weise herstellbar. Eine weitere Optimierung des Herstellverfahrens läßt sich dadurch erzielen, daß die Betriebsparameter der Laserstrahlenquelle entsprechend den gemessenen, in der Fügezone herrschenden Prozeßparametern, wie Druck und Temperatur, geregelt werden.

Die mit der Erfindung erzielten Vorteile bestehen insbesondere darin, daß eine qualitativ hochwertige Schweißnaht, die überlappend oder stumpf ausgestaltet sein kann und insbesondere wenigstens zum Teil im Inneren des Werkstückes, auch bei Werkstücken mit großen Wanddicken verlaufen kann, beim Verschweissen mittels Laserstrahlen erzielbar ist. Die Nahtgestaltung ist anders als beim bisher üblichen Ultraschallschweissen frei den konstruktiven Erfordernissen anpassbar, d.h. sie kann im Gehäuse beliebig räumlich angeordnet sein. Der Verlauf der Schweißnaht ist durch eine programmierbare Strahlführung der Laserstrahlen oder Bewegung des Werkstückes herstellbar, so daß eine flexible Fertigung von unterschiedlichsten Werkstükken möglich ist. Das Verschweissen der Werkstückteile erfolgt lediglich durch deren Erwärmung, weitere Zusatzstoffe sind jedenfalls für die eigentliche Verschweissung nicht notwendig. Besonders bei der Herstellung von elektrischen Schaltern wird Ausschuß vermieden, da eine Zerstörung der elektrischen Bauteile nicht zu befürchten ist.

Ausführungsbeispiele der Erfindung sind in den Zeichnungen dargestellt und werden im folgenden näher beschrieben. Es zeigen

Fig. 1 schematisch eine Vorrichtung zur Verschweissung eines Gehäuses für einen elektrischen Schalter,

Fig. 2 einen Längsschnitt durch ein Gehäuse,

Fig. 3 einen vergrößerten Ausschnitt gemäß Einzelheit X aus Fig. 1,

Fig. 4 einen Längsschnitt durch einen Teil eines Gehäuses in einer weiteren Ausführungsform,

Fig. 5 einen Längsschnitt durch einen Teil eines Gehäuses in noch einer weiteren Ausführungsform,

Fig. 6 einen Längsschnitt durch die Wand eines Gehäuses in anderer Ausführungsform,

Fig. 7 einen Längsschnitt durch die Wand eines Gehäuses in wiederum anderer Ausführungsform,

Fig. 8 einen Längsschnitt durch die Wand eines Gehäuses in nochmals anderer Ausführungsform,

Fig. 9 einen Querschnitt durch ein Gehäuse mit komplexer räumlicher Ausgestaltung und

Fig. 10 einen Schnitt entlang der Linie 10-10 aus Fig. 9.

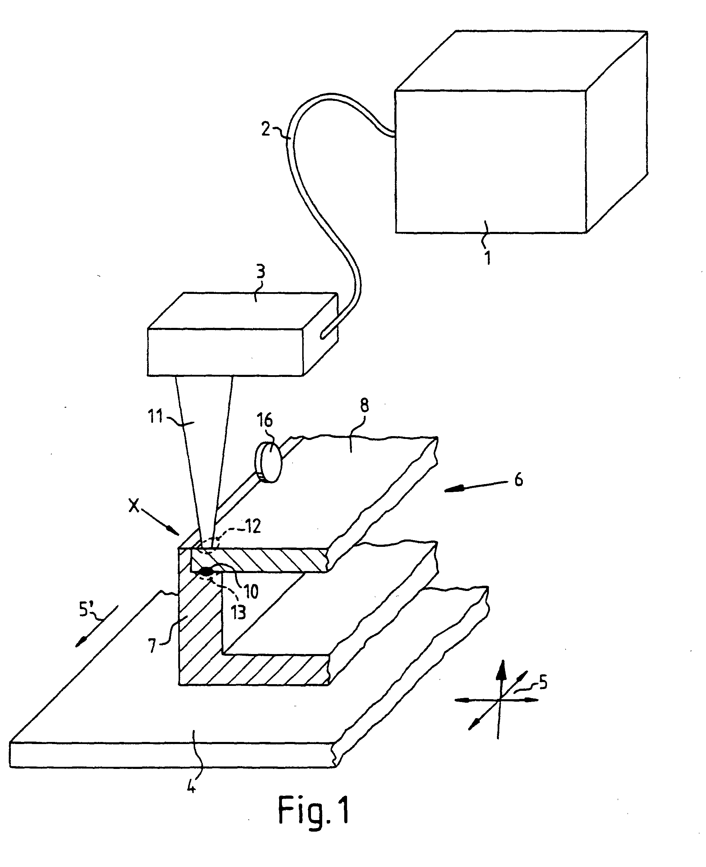

In Fig. 1 ist eine Vorrichtung zum Verschweissen von Werkstückteilen mittels eines Laserstrahls entsprechend dem erfindungsgemäßen Verfahren schematisch dargestellt. Diese Vorrichtung besteht aus einer Laserstrahlenquelle 1, beispielsweise einem Nd:YAG-Laser, dessen Lichtaustrittsöffnung über einen flexiblen Lichtleiter 2 mit einer Optik 3 verbunden ist, so daß die Laserstrahlenquelle 1 beliebig im Raum positionierbar ist. Die Optik 3 ist über einer Werkstückaufnahme 4 angeordnet, die mittels Antrieben durch eine Steuerung bewegbar ist, beispielsweise wie in Fig. 1 mittels der Richtungspfeile 5 angedeutet ist. Selbstverständlich kann auch die Optik 3 bewegbar ausgebildet sein.

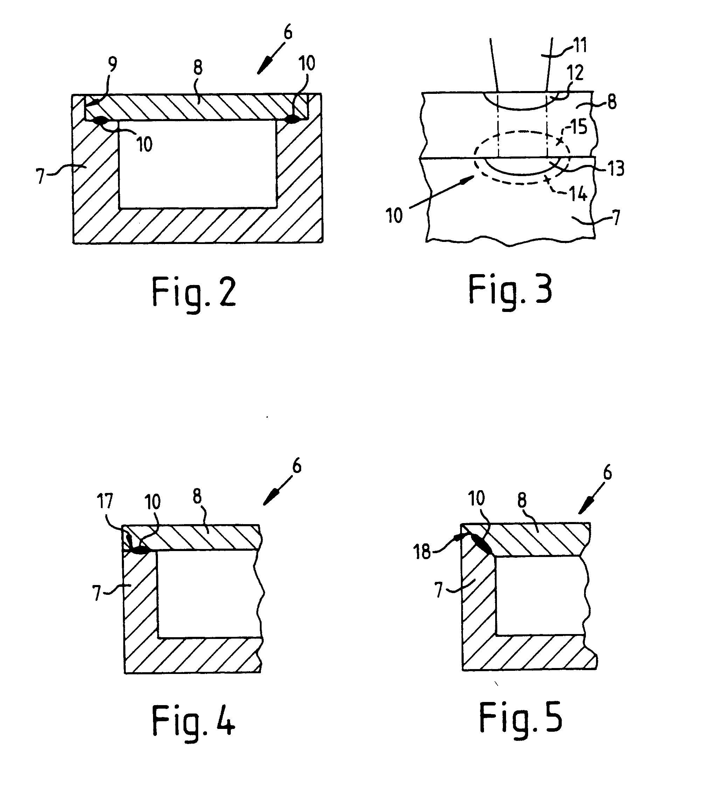

Auf der Werkstückaufnahme 4 sind die miteinander zu verschweissenden Werkstückteile, nämlich die Teile für ein Gehäuse 6 zweckmäßig angeordnet, wobei es sich bei dem Gehäuse 6 vorliegend um das Gehäuse für einen elektrischen Schalter handelt. Das Gehäuse 6 besteht aus zwei Gehäuseteilen, und zwar aus einem topfförmigen Gehäusesockel 7, der das zweite Werkstückteil bildet, und einem Gehäusedeckel 8, der das erste Werkstückteil darstellt. Sowohl der Gehäusesockel 7 als auch der Gehäusedeckel 8 bestehen aus Kunststoff, vorzugsweise einem thermoplastischen Kunststoff. Wie näher aus Fig. 2 hervorgeht, besitzt der Gehäusesockel 7 einen ringsumlaufenden Absatz 9, auf den der Gehäusedeckel 8 aufgelegt ist. Am Absatz 9 ist der Gehäusedeckel 8 mittels Laserstrahlen entlang einer kontinuierlich ringsumlaufenden Fügezone 10 mit dem Gehäusesockel 7 verschweißt, so daß das Innere des Gehäuses 6 des elektrischen Schalters hermetisch abgedichtet ist, insbesondere also vor dem Eindringen von Staub geschützt ist.

Wie weiter aus Fig. 1 hervorgeht, werden der Gehäusedeckel 8 und der Gehäusesockel 7 mittels Laserstrahlen 11, die von der Optik 3 auf das Gehäuse 6 abgestrahlt werden, entlang der Fügezone 10 derart erwärmt, daß der Gehäusesockel 7 und der Gehäusedeckkel 8 in der Fügezone 10 in einen schmelzflüssigen Zustand gelangen. Dadurch entsteht eine Verbindung von Gehäusesockel 7 und Gehäusedeckel 8 in der Fügezone 10, die sich bei der anschließenden Abkühlung verfestigt und eine Schweißnaht bildet. Danach kann sich falls notwendig, zum Abbau von Schweißspannungen in der Fügezone 10 ein thermisches Tempern anschließen. Durch entsprechende Bewegung der Werkstückaufnahme 4 und/oder der Optik 3 bzw. der Laserstrahlenquelle 1 wird eine ringsumlaufende längliche Fügezone 10 am Gehäuse 6 erzielt. Falls es ausreichend ist, kann das Gehäuse 6 auch lediglich an einzelnen Stellen verschweißt sein, so daß keine kontinuierliche sondern eine abschnittsweise, sektorale Fügezone erhalten wird. Vorteilhafterweise werden beim sektoralen Verschweissen geringere Schweißspannungen eingebracht, womit gegebenenfalls ein nachträgliches Tempern überflüssig sein kann.

Es ist unmittelbar ersichtlich, daß durch entsprechende Bewegung der Laserstrahlenquelle 1 bzw. der Optik 3 und der Werkstückteile 7, 8 relativ zueinander auch eine frei orientierbare, dreidimensional räumlich angeordnete Fügezone 10 im Gehäuse 6 erzeugt werden kann. Zu diesem Zweck ist beispielsweise die Werkstückaufnahme 4 als Mehrachsen-Handhabungsgerät ausgebildet, daß gemäß den Pfeilen 5 in drei Dimensionen bewegbar ist. Ebensogut läßt sich dafür ein Roboter verwenden oder die Optik 3 entsprechend bewegen. Die gewünschte räumliche Bewegung der Werkstückaufnahme 4 ist programmierbar, so daß dann bei der Verschweissung die dazu korrespondierende räumlich ausgestaltete Fügezone 10 erzeugt wird. Vorteilhafterweise lassen sich dadurch auf einfach handhabbare und flexible Weise komplex ausgestaltete Fügezonen 10 erzeugen, wie sie insbesondere bei Gehäusen 6 für elektrische Schalter vorkommen.

Wie besonders in Fig. 2 zu sehen ist, liegt die Fügezone 10 konstruktionsbedingt im Inneren des Gehäuses 6, wobei die Fügezone 10 aufgrund des Absatzes 9 einen überlappenden Stoß aufweist. Entsprechend einer weiteren Ausführungsform, die in Fig. 4 zu sehen ist, sind der Gehäusedeckel 8 und der Gehäusesockel 7 mit einem stumpf überlappenden Stoß 17 ausgebildet. In noch einer weiteren Ausführung gemäß Fig. 5 weisen der Gehäusesockel 7 und der Gehäusedeckel 8 einen keilförmig überlappenden Stoß 18 auf. Auch bei diesen weiteren Ausführungsformen befindet sich die Fügezone 10 wenigstens zum Teil im Inneren des Gehäuses 6.

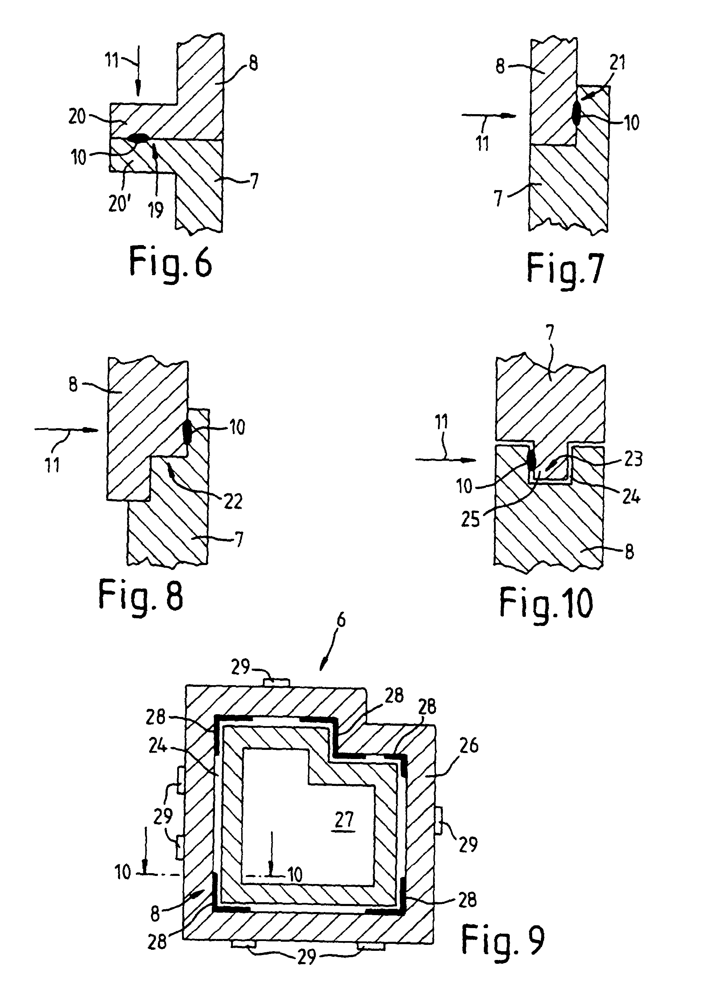

In nochmals einer weiteren Ausführungsform ist in Fig. 6 ein weiterer absatzartig überlappender Stoß 19 gezeigt. Die Werkstückteile 7, 8 besitzen jeweils einen an der eigentlichen Wandung auskragenden Absatz 20, 20', wobei die Fügezone 10 am Übergang zwischen den auskragenden Absätzen 20, 20' angeordnet ist. Die Laserstrahlen 11 wirken dabei ungefähr senkrecht auf den auskragenden Absatz 20 an der dem auskragenden Absatz 20'gegenüberliegenden Seite ein. Noch weitere Ausbildungen für absatzförmige Stösse sind in den Fig. 7 und 8 zu sehen. Beim absatzartigen Stoß 21 in Fig. 7 ist das Werkstückteil 7 mit einer stufenförmigen Aufnahme versehen, in die die Wandung des Werkstückteils 8 eingesetzt ist. In Fig. 8 schließlich ist das Werkstückteil 7 mit einer treppenartigen Aufnahme versehen, in die die dazu korrespondierende Wandung des Werkstückteils 8 gemäß einem absatzartigen Stoß 22 eingesetzt ist.

Schließlich ist noch in Fig. 10 ein nutenartig überlappender Stoß 23 gezeigt, mit dem insbesondere eine gute Abdichtwirkung in der Art einer Labyrinthdichtung gegen das Eindringen von Staub in das Innere des Gehäuses 6 erzielt wird. Hierzu ist in der Wand des Werkstückteils 8 eine Nut 24 ausgebildet, in die eine dazu korrespondierende Feder 25 an der Wand des Werkstückteils 7 eingreift. Die Laserstrahlen 11 treffen ungefähr senkrecht auf die Oberfläche des Werkstückteils 8 im Bereich der Nut 24, womit eine Fügezone 10 zwischen der Feder 25 und der Nut 24 an der dieser Oberfläche des Werkstückteils 8 zugewandten Seite entsteht.

In Fig. 9 ist ein Schnitt durch ein etwas komplexer ausgestaltetes Werkstückteil 6 gezeigt, bei dem die Wände 26 eine dreidimensional räumlich verlaufende Kontur besitzen, die dem jeweiligen Verwendungszweck angepaßt ist. Ein derartig komplexes Gehäuse 6 wird beispielsweise bei einem elektrischen Schalter für Elektrohandwerkzeuge verwendet und besitzt einen von den Wänden 26 des Werkstückteils 8 begrenzten innenliegenden Hohlraum 27, der zur Aufnahme der Funktionsteile des elektrischen Schalters dient. Zur Erzielung einer guten Staubdichtheit für den Hohlraum 27, ist in der Wand 26 eine Nut 24 befindlich, an der eine Feder 25 des weiteren Werkstückteils 7 eingreift, wie anhand der Fig. 10 bereits erläutert ist.

Wie in Fig. 9 weiter zu sehen ist, befinden sich in der Nut 24 sektorale Fügezonen 28, so daß die beiden Werkstückteile 7, 8 dort an den aneinander liegenden Verbindungsflächen miteinander verschweißt sind. Die sektoralen Fügezonen 28 besitzen einen haken- oder zickzackförmigen Verlauf, der durch eine entsprechend programmierbare, dreidimensional räumliche Relativbewegung zwischen den Laserstrahlen 11 und den Werkstückteilen 7, 8 erzeugt wird. Die Fügezonen 28 sind nicht kontinuierlich durchgehend angebracht, sondern lediglich in einzelnen Sektoren. Hierbei handelt es sich vor allem um den Bereich der Ecken der Wände 26 bzw. von Wendepunkten, in denen die Schweißnaht eine sprunghafte Richtungsänderung aufweist. Weiter können sektorale Fügezonen auch in Bereichen angeordnet sein, an denen sich nicht weiter gezeigte Durchführungen o. dgl., beispielsweise für Wellen, Stößel usw., von der Außenseite in den Hohlraum 27 des Gehäuses 6 befinden. Solche Bereiche sind für die Dichtheit besonders kritisch und werden von den sektoralen Fügezonen 28 sicher abgedichtet.

Zwischen den Sektoren der Fügezonen 28 verlaufen lediglich geradlinige Flächen, die weniger aufwendig abgedichtet werden können. Es genügt hier die nicht verschweißte Überlappung zwischen den Nuten 24 und der Feder 25 an den Wänden 26 der Werkstückteile 7, 8, womit diese als Dichtnuten wirken. Hierzu unterstützend können noch Schnappverbindungen 29 o. dgl. zwischen den Sektoren der Fügezonen 28 angebracht sein, mit deren Hilfe die Verbindungsflächen an den Wänden 26 der beiden Werkstückteile 7, 8 in diesen Bereichen abdichtend aufeinander gepreßt sind. Da in einem solchen Fall nur sektorale Fügezonen 28 angeordnet sind, erhält man vorteilhafterweise eine Zeitersparnis beim Verschweissen der Werkstückteile 7, 8.

Um eine genügende Erwärmung der Fügezone 10 zu erzielen, besitzen der Gehäusesockel 7 und der Gehäusedeckel 8 wenigstens in Teilbereichen für das Spektrum der Laserstrahlen 11 unterschiedliche Eigenschaften. So ist der Transmissionskoeffizient für die Laserstrahlen 11 beim Gehäusedeckel 8 größer als derjenige beim Gehäusesockel 7 während umgekehrt der Absorptionskoeffizient beim Gehäusesockel 7 größer als beim Gehäusedeckel 8 ist. Die beiden aus Gehäusesockel 7 sowie Gehäusedeckel 8 bestehenden Werkstückteile und die Optik 3 der Laserstrahlenquelle 1 sind nun derart relativ zueinander positioniert, daß die Laserstrahlen 11 auf der der Fügezone 10 abgewandten Seite am Gehäusedeckel 8 in einer ersten Einkoppelzone 12 auftreffen, wie der Fig. 3 zu entnehmen ist. Das erste Werkstückteil, nämlich der Gehäusedeckel 8, ist aufgrund seines großen Transmissionskoeffizienten im Bereich von der ersten Einkoppelzone 12 bis zur Fügezone 10 für das Spektrum der Laserstrahlen 11 wenigstens teilweise transmittierend ausgebildet. Dadurch kann wenigstens ein Teil der Laserstrahlen 11 den Gehäusedeckel 8 durchdringen. Dieser Teil der Laserstrahlen 11 dringt dann an einer zweiten Einkoppelzone 13, die in Fig. 3 schematisch angedeutet ist, in das zweite Werkstückteil, nämlich den Gehäusesockel 7 ein. Wie man sieht, liegen die erste und zweite Einkoppelzone 12, 13 im wesentlichen auf der durch die Laserstrahlen 11 gebildeten Geraden. Insbesondere steht diese Gerade ungefähr senkrecht zu den Einkoppelzonen 12, 13.

Der Gehäusesockel 7 ist im Bereich der Fügezone 10 an der zweiten Einkoppelzone 13 für das Spektrum der Laserstrahlen 11 aufgrund seines großen Absorptionskoeffizienten wenigstens teilweise absorbierend ausgebildet, so daß wenigstens ein Teil dieser an der zweiten Einkoppelzone 13 auftreffenden Laserstrahlen 11 in einer Absorptionszone 14 den Gehäusesockel 7 erwärmt. Es kann dabei ausreichen, wenn der Gehäusesockel 7 derart an der Oberfläche der zweiten Einkoppelzone 13 absorbierend ausgebildet ist oder die Wellenlänge der verwendeten Laserstrahlen 11 entsprechend gewählt wird, daß die Laserstrahlen 11 lediglich eine kleine Distanz, vorzugsweise von wenigen μm in den Gehäusesockel 7 eindringen, womit die Absorptionszone 14 ebenfalls lediglich oberflächlich im Gehäusesockel 7 ausgebildet ist, wie in Fig. 3 angedeutet ist. Aufgrund von Wärmeleitung aus der Absorptionszone 14 in den angrenzenden Gehäusedeckel 8 wird dieser in einer Wärmeleitungszone 15 ebenfalls erwärmt. Durch die Erwärmung in der Absorptionszone 14 und der Wärmeleitungszone 15 wird der Kunststoff schmelzflüssig, womit nach Erkalten sich in diesen beiden Zonen 14, 15 die gemeinsame verfestigte Fügezone 10 ausbildet.

Wie bereits erwähnt, besteht das Gehäuse 6 aus einem Kunststoff. Als besonders geeignet für das Gehäuse eines elektrischen Schalters hat sich dabei die Verwendung von Styrol-Acrylnitril-Copolymerisat, Polyamid o. dgl. erwiesen. Zur Einstellung der teilweisen Transparenz des Gehäusedeckels 8 und der teilweisen Absorption des Gehäusesockels 7 für das Spektrum der Laserstrahlen 11, also des Transmissions- und Absorptionskoeffizienten, werden als Zusatzstoffe dienende Additive im Kunststoff, wie Farbpigmente, Glasfasern o. dgl. verwendet. Dabei erfolgt die entsprechende Einstellung durch einen unterschiedlichen Anteil der Additive in den beiden Werkstückteilen 7, 8, wobei die Anteile so gewählt werden, daß die Reflektivität der beiden Werkstückteile 7, 8 für das Spektrum der sichtbaren Lichtstrahlen im wesentlichen gleich ist. Insbesondere hat es sich als günstig herausgestellt, den hohen Absorptionskoeffizienten für den Gehäusesockel 7 durch schwarze Farbstoffpigmente zu erzielen. Entsprechende Versuche haben bei den genannten Kunststoffsorten ergeben, daß es günstig ist, für den teilweise absorbierenden Kunststoff des Gehäusesockels 7 eine Pigmentierung durch 1% bis 2% Farbstoffe und für den Kunststoff des teilweisen transmittierenden Gehäusedeckels 8 eine geringere Pigmentierung vorzunehmen. Die beiden Werkstückteile 7, 8 sind dann für das mit dem menschlichen Auge sichtbare Lichtspektrum im wesentlichen undurchsichtig und ungefähr optisch gleichmäßig schwarz eingefärbt. Vorteilhafterweise bieten dann die beiden Werkstückteile 7, 8 im Gehäuse 6 einen optisch homogenen Eindruck, so daß die unterschiedliche Einstellung des jeweiligen Kunststoffs für das Auge nicht wahrnehmbar ist.

Versuche mittels eines Nd:YAG-Lasers von 10 W Leistung, der Laserstrahlen mit einer Wellenlänge von ca. 1,06 μm erzeugt, die besonders geeignet für die genannten Kunststoffsorten ist, und einer Vorschubgeschwindigkeit des Gehäuses 6 relativ zur Optik 3 von 3 m/min haben ergeben, daß man gute Ergebnisse für die Verschweissung unter Einhaltung folgender Parameter erzielt. Der Gehäusedeckel 8 sollte eine Transmission T von größer als 60% und eine Absorption A von kleiner als 30% sowie gegebenenfalls eine Reflektivität R von kleiner als 20 % für das Spektrum von Nd:YAG-Laserstrahlen besitzen. Der Gehäusesockel 7 sollte weiter eine Absorption A von größer als 90% und insbesondere eine vernachlässigbare Transmission T sowie gegebenenfalls eine Reflektivität R von kleiner als 10% besitzen. Die Prozentzahlen sind dabei jeweils auf die in den Einkoppelzone 12, 13 auftreffenden Laserstrahlen 11 bezogen. Im jeweiligen Einzelfall gilt

$$T + A + R = 100\%.$$

Es ist noch hervorzuheben, daß der an den jeweiligen Einkoppelzonen 12, 13 reflektierte Anteil der Laserstrahlen 11 wenig zur Erwärmung in der Fügezone 10 beiträgt und daher durch entsprechende Einstellung des Kunststoffes möglichst klein gehalten werden sollte.

Zur Verbesserung der Güte der Verschweissung kann während oder nach der Erwärmung und dem Aufschmelzen der Fügezone 10 durch die Laserstrahlen 11 eine Druckeinwirkung im Bereich der Fügezone 10 vorgenommen werden. In Fig. 1 ist dazu eine Andruckrolle 16 gezeigt, die auf die Oberseite des Gehäusedeckels 8 im Bereich der Fügezone 10 einwirkt. Diese Andruckrolle 16 wird den Laserstrahlen 11 entsprechend der Vorschubbewegung der Werkstückaufnahme 4 gemäß dem Richtungspfeil 5' nachgeführt. Damit wirkt der Druck der Andruckrolle 16 bis zum Erkalten der Fügezone 10 ein, womit ein Austreten der Schmelze aus der Fügezone 10 verhindert wird und die Gefahr einer Lunkerbildung in der Fügezone 10 gebannt ist. Es ist aus Fig. 1 ersichtlich, daß diese Druckeinwirkung benachbart zum Fokus der Laserstrahlen 11 erfolgt, so daß die Laserstrahlen 11 in der Einkoppelzone 12 am Gehäusedeckel 8 ungestört sind. Selbstverständlich lassen sich anstelle einer Andruckrolle 16 auch nicht weiter gezeigte, an sich bekannte hydraulische, pneumatische o. dgl. Niederhalter verwenden, die aufgrund der frei orientierbaren Strahlführung außerhalb der Führung der Laserstrahlen 11 angeordnet sein können. Falls diese Niederhalter aus einem für das Spektrum der Laserstrahlen 11 weitgehend transparenten Material bestehen, können diese Niederhalter auch in der Führung der Laserstrahlen befindlich sein.

Die Qualität der Verschweissung läßt sich weiter positiv beeinflussen, indem die Betriebsparameter der Laserstrahlenquelle 1 fortlaufend in Abhängigkeit von den in der Fügezone 10 herrschenden Prozeßparametern geregelt werden. Bei diesen Prozeßparametern handelt es sich um die Temperatur, den Druck u. dgl.. Sie werden fortlaufend gemessen und bei Abweichungen von den Sollwerten werden die Betriebsparameter der Laserstrahlenquelle 1 entsprechend verändert bis wiederum die gewünschten Sollwerte erreicht sind.

Die Erfindung ist nicht auf die beschriebenen und dargestellten Ausführungsbeispiele beschränkt. So läßt sich die Erfindung nicht nur bei der Herstellung von elektrischen Schaltern anwenden, sondern kann an beliebigen aus Kunststoff bestehenden Werkstücken, Gehäusen o. dgl., beispielsweise für Haushaltsgeräte, Verpackungen usw., Verwendung finden.

## Patentansprüche

1. Werkstück, insbesondere Gehäuse (6) für einen elektrischen Schalter, bei dem zwei, wenigstens in Teilbereichen einen voneinander unterschiedlichen Transmissions- sowie Absorptionskoeffizienten für das Spektrum der Laserstrahlen (11) besitzende, miteinander durch Laserstrahlen (11) entlang einer Fügezone (10) verschweißte Werkstückteile (7, 8) aus Kunststoff, vorzugsweise einem thermoplastischen Kunststoff angeordnet sind, wobei das eine erste Werkstückteil (8) im Bereich von einer ersten Einkoppelzone (12), in der die Laserstrahlen (11) auf das erste Werkstückteil (8) treffen, bis zur Fügezone (10) transmittierend für die Laserstrahlen (11) ausgebildet ist, wodurch ein Teil der Laserstrahlen (11) das erste Werkstückteil (8) durchdringen und an einer zweiten Einkoppelzone (13) in das zweite Werkstückteil (7) eindringen kann, und dass das weitere zweite Werkstückteil (7) im Bereich der Fügezone (10) an der zweiten Einkoppelzone (13) absorbierend für die Laserstrahlen (11) ausgebildet ist, **dadurch gekennzeichnet, dass** beide Werkstückteile (7, 8) jeweils Additive im Kunststoff enthalten, beispielsweise Glasfasern oder Farbpigmente, insbesondere schwarze Farbpigmente, wobei der Transmissionskoeffizient des ersten Werkstückteils (8) und der Absorptionskoeffizient des zweiten Werkstückteils (7) durch einen unterschiedlichen Anteil der Additive derart eingestellt ist, dass das erste Werkstückteil (8) im Bereich von der ersten Einkoppelzone (12) bis zur Fügezone (10) für das Spektrum der Laserstrahlen (11) wenigstens teilweise transmittierend ist, dass das zweite Werkstückteil (7) im Bereich der zweiten Einkoppelzone (13) für das Spektrum der Laserstrahlen (11) wenigstens teilweise absorbierend ist, und dass die Reflektivität der beiden Werkstückteile (7, 8) für das Spektrum der sichtbaren Lichtstrahlen im wesentlichen gleich ist.

2. Werkstück nach Anspruch 1, **dadurch gekennzeichnet, daß** das zweite Werkstückteil (7) derart an der Oberfläche der zweiten Einkoppelzone (13) absorbierend ausgebildet ist und/oder die Wellenlänge für die Laserstrahlen (11) derart gewählt ist, daß die Laserstrahlen (11) lediglich eine kleine Distanz, vorzugsweise von wenigen μm in das zweite Werkstückteil (7) eindringen, so daß die Absorptionszone (14) für die Laserstrahlen (11) im zweiten Werkstückteil (7) oberflächlich ausgebildet ist.

3. Werkstück nach Anspruch 1 oder 2, **dadurch gekennzeichnet, daß** die beiden Werkstückteile (7, 8) aus demselben Kunststoff, beispielsweise aus Styrol-Acrylnitril-Copolymerisat oder Polyamid, bestehen, wobei vorzugsweise bei dem absorbierenden Kunststoff eine Pigmentierung durch 1% bis 2% Farbstoffe und bei dem transmittierenden Kunststoff eine geringere Pigmentierung vorgenommen ist, und wobei weiter vorzugsweise der Kunststoff für beide Werkstückteile (7, 8) für das mit dem menschlichen Auge sichtbare Lichtspektrum im wesentlichen undurchsichtig ist.

4. Werkstück nach Anspruch 1, 2 oder 3, **dadurch gekennzeichnet, daß** das erste Werkstückteil (8) eine Transmission T von größer als 60%, eine Absorption A von kleiner als 30% und gegebenenfalls eine Reflektivität R von kleiner als 20% sowie das zweite Werkstückteil (7) eine Absorption A von größer als 90%, insbesondere eine vernachlässigbare Transmission T und gegebenenfalls eine Reflektivität R von kleiner als 10% jeweils bezogen auf die in den Einkoppelzonen (12, 13) der Werkstückteile (7, 8) treffenden Laserstrahlen (11) besitzen.

5. Werkstück nach einem der Ansprüche 1 bis 4, **dadurch gekennzeichnet, daß** die zu verbindenden Werkstückteile (7, 8) derart ausgestaltet sind, daß diese in der Fügezone (10) einen überlappenden (9), gegebenenfalls keilförmig überlappenden (18), nutenartig überlappenden (23), absatzartig überlappenden (9, 19, 21, 22) oder stumpf überlappenden (17) Stoß aufweisen, wobei vorzugsweise die Fügezone (10) in dreidimensional räumlicher Anordnung entlang der Verbindung der Werkstückteile (7, 8) verläuft, und wobei weiter vorzugsweise wenigstens ein Teil der Fügezone (10) im Inneren des Werkstücks befindlich ist.

6. Werkstück nach einem der Ansprüche 1 bis 5, **dadurch gekennzeichnet, daß** die beiden Werkstückteile (7, 8) Wände (26) besitzen, die wenigstens einen Teil eines innenliegenden Hohlraums (27) begrenzen, daß vorzugsweise die Fügezone (10) in einzelnen Sektoren (28), die gegebenenfalls im Bereich von Ecken an den Wänden (26) oder Durchführungen in den Hohlraum (27) angeordnet sind, oder kontinuierlich entlang der aneinander liegenden Verbindungsflächen der Wände (26) verläuft und daß weiter vorzugsweise zwischen den einzelnen Sektoren (28) die Wände (26) zur Erzielung einer Abdichtung des Hohlraums (27), insbesondere gegen Staubeinwirkung, einander überlappend mit Schnappverbindungen (29) oder Dichtnuten (24) ausgebildet sind.

7. Verfahren zum Verschweissen mittels Laserstrahlen (11) von aus Kunststoff, vorzugsweise aus einem thermoplastischen Kunststoff, bestehenden Werkstückteilen (7, 8), insbesondere Gehäuseteile für elektrische Schalter, nach einem der Ansprüche 1 bis 6, wobei ein erstes transparentes Werkstückteil (8), und ein zweites absorbierendes Werkstückteil (7), durch eine Fügezone (10) miteinander zu einem Werkstück verbunden werden, indem die beiden Werkstückteile (7, 8) und die Laserstrahlenquelle (1) gegebenenfalls mittels einer Optik (3) relativ zueinander derart positioniert werden, daß die Laserstrahlen (11) zunächst an einer ersten Einkoppelzone (12) auf das erste Werkstückteil (8) treffen, womit ein Teil der Laserstrahlen (11) das erste Werkstückteil (8) durchdringt, und daß dieser Teil der Laserstrahlen (11) anschließend im Bereich der Fügezone (10) an einer zweiten Einkoppelzone (13) in das zweite Werkstückteil (7) eindringt, womit das zweite Werkstückteil (7) im Bereich der zweiten Einkoppelzone (13) erwärmt wird, so daß die beiden Werkstückteile (7, 8) in der Fügezone (10) in einen schmelzflüssigen Zustand gelangen und beim anschließenden Erkalten eine Verfestigung der Fügezone (10) erzielt wird, **dadurch gekennzeichnet, daß** die beiden Werkstückteile (7, 8) jeweils Additive, insbesondere Farbstoffpigmente, enthalten, wobei die Werkstückteile (7, 8) durch einen unterschiedlichen Anteil der Additive derart eingestellt werden, daß das erste Werkstückteil (8) im Bereich von der ersten Einkoppelzone (12) bis zur Fügezone (10) für das Spektrum der Laserstrahlen (11) wenigstens teilweise transmittierend ist, daß das zweite Werkstückteil (7) im Bereich der zweiten Einkoppelzone (13) für das Spektrum der Laserstrahlen (11) wenigstens teilweise absorbierend ist, und daß die Reflektivität der beiden Werkstückteile (7, 8) für das Spektrum der sichtbaren Lichtstrahlen im wesentlichen gleich ist.

8. Verfahren zum Verschweissen von Werkstückteilen nach Anspruch 7, **dadurch gekennzeichnet, daß** die Laserstrahlenquelle (1) so positioniert wird, daß die Laserstrahlen (11) gegebenenfalls mittels einer Optik (3) derart auf die beiden Werkstückteile (7, 8) ausrichtbar sind, daß die erste und zweite Einkoppelzone (12, 13) im wesentlichen auf der durch die Laserstrahlen (11) gebildeten Geraden, insbesondere ungefähr senkrecht zu dieser Geraden liegen, wobei vorzugsweise die Laserstrahlenquelle (1) oder die Optik (3) für die Laserstrahlenquelle (1) und die Werkstückteile (7, 8) derart relativ zueinander bewegt werden, insbesondere durch eine programmierbare Bewegung, wie mittels eines Roboters oder eines Mehrachsen-Handhabungsgeräts, daß eine längliche, gegebenenfalls frei orientierbare, dreidimensional räumlich sowie gegebenenfalls an einzelnen Stellen sektoral (28) im Werkstück angeordnete Fügezone (10) erzeugt wird.

9. Verfahren zum Verschweissen von Werkstückteilen nach Anspruch 7 oder 8, **dadurch gekennzeichnet, daß** während oder nach Erwärmung und Aufschmelzen der Fügezone (10) durch die Laserstrahlen (11) eine Druckeinwirkung im Bereich der Fügezone (10), insbesondere bis zum Erkalten der Fügezone (10), vorgenommen wird, daß vorzugsweise die Druckeinwirkung benachbart zum Fokus der Laserstrahlen (11) und insbesondere mit den Laserstrahlen (11) nachführbar oder gegebenenfalls außerhalb der Führung der Laserstrahlen (11) auf die Werkstückteile (7, 8) vorgenommen wird und daß weiter vorzugsweise die Druckeinwirkung über hydraulische, pneumatische oder rollenartige (16) Niederhalter, die gegebenenfalls für die Laserstrahlen (11) transparent sein können, vorgenommen wird.

10. Verfahren zum Verschweissen von Werkstückteilen nach Anspruch 7, 8 oder 9, **dadurch gekennzeichnet, daß** die Betriebsparameter der Laserstrahlenquelle (1), bei der es sich vorzugsweise um einen Nd:YAG-Laser handelt, in Abhängigkeit von den in der Fügezone (10) herrschenden Prozeßparametern, wie Temperatur und/oder Druck, geregelt werden und daß vorzugsweise das Werkstück nach dem Verschweissen zum Abbau der Schweißspannungen thermisch getempert wird.

**Claims**

1. Work piece, in particular a casing (6) for an electric switch, in which are arranged two work piece parts (7, 8), which at least in part-areas, have a different transmission and absorption coefficient from one another for the spectrum of the laser beams (11), are welded to one another along a seam zone (10) by laser beams (11) and are made of plastic, preferably a thermoplastic plastic, whereby the first work piece part (8) is constructed to be transparent as far as the seam zone (10) to the laser beams (11) in the region of a first coupling-in zone (12), in which the laser beams (11) strike against the first work piece part (8), as a result of which part of the laser beams (11) can penetrate into the first work piece part (8) and can penetrate into the second work piece part (7) at a second coupling-in zone (13), and that the second work piece part (7) is constructed to be absorbent to the laser beams (11) in the region of the seam zone (10) at the second coupling-in zone (13), **characterised in that** the transmission coefficient of the first work piece part (8) and the absorption coefficient of the second work piece part (7) are adjusted by the proportion of additives in the plastic, e.g. of glass fibres or colour pigments, in particular of black colour pigments, in such a way that the first work piece part (8) is at least partially transparent to the spectrum of the laser beams (11) in the region of the first coupling-in zone (12) up to the seam zone (10), that the second work piece part (7) is at least partially absorbent to the spectrum of the laser beams (11) in the region of the second coupling-in zone (13), and that the reflectivity of the two work piece parts (7, 8) is essentially the same for the spectrum of the visible light beams.

2. Work piece according to Claim 1, **characterised in that** the second work piece part (7) is constructed to be absorbent on the surface of the second coupling-in zone (13) and/or the wavelength for the laser beams (11) is selected in such a manner that the laser beams (11) only penetrate into the second work piece part (7) for a short distance, preferably of few µm, so that the absorption zone (14) for the laser beams (11) is constructed superficially in the second work piece part (7).

3. Work piece according to Claim 1 or 2, **characterised in that** the two work piece parts (7, 8) are made of the same plastic, e.g. styrene acrylonitrile copolymer, whereby preferably in the case of the absorbent plastic, pigmentation is provided by 1% to 2% dyes and in the case of the transparent plastic less, or possibly no pigmentation is provided, and whereby it is further preferred that the plastic for both work piece parts (7, 8) is essentially non-transparent to the light spectrum visible to the human eye.

4. Work piece according to Claim 1, 2 or 3, **characterised in that** the first work piece part (8) has a transmission T of more than 60%, an absorption A of less than 30% and possibly a reflectivity R of less than 20%, and the second work piece part (7) has an absorption A of more than 90%, in particular has a negligible transmission T and possibly a reflectivity R of less than 10%, respectively with respect to the laser beams (11) striking in the coupling-in zones (12, 13) of the work piece parts (7, 8).

5. Work piece according to one of Claims 1 to 4, **characterised in that** the work piece parts (7, 8) to be joined are constructed in such a manner that in the seam zone (10) these have an overlapping abutment (9), possibly an abutment overlapping in a wedge shape (18), overlapping in the manner of a groove (23), overlapping in the manner of a shoulder (9, 19, 21, 22) or one overlapping flush (17), whereby preferably the seam zone (10) extends along the join of the work piece parts (7, 8) in a three-dimensionally spatial arrangement, and whereby it is further preferred that at least one part of the seam zone (10) is located inside the work piece.

6. Work piece according to one of Claims 1 to 5, **characterised in that** the two work piece parts (7, 8) have walls (26) which define at least a part of an internal cavity (27), that the seam zone (10) preferably runs along the abutting connection surfaces of the walls (26) continuously or in individual sectors (28), which are possibly arranged in the region of corners on the walls (26) or passages into the cavity (27), and that it is further preferred that between the individual sectors (28) the walls (26) overlap one another and are provided with snap connections (29) or sealing grooves (24) in order to seal the cavity (27), in particular against the effects of dust.

7. Process for welding work piece parts (7, 8), in particular casing parts for electric switches, made of plastic, preferably a thermoplastic plastic, by means of laser beams (11), according to one of Claims 1 to 6, wherein a first transparent work piece part (8) and a second absorbent work piece part (7) are joined to one another by means of a seam zone (10) to form a work piece, in that the two work piece parts (7, 8) and the laser beam source (1) are possibly positioned relative to one another by means of an optical system (3) such that the laser beams (11) firstly hit the first work piece part (8) on a first coupling-in zone (12), as a result of which part of the laser beams (11) penetrate into the first work piece part (8), and that this part of the laser beams (11) subsequently penetrate into the second work piece part (7) in the region of the seam zone (10) at a second coupling-in zone (13), as a result of which the second work piece part (7) is heated in the region of the second coupling-in zone (13), so that the two work piece parts (7, 8) in the seam zone (10) change into a molten state and upon subsequent cooling, hardening of the seam zone (10) is achieved, **characterised in that** the two work piece parts (7, 8) each contain additives, in particular colour pigments, whereby the work piece parts (7, 8) are adjusted through a different proportion of additives in such a way that in the region from the first coupling-in zone (12) up to the seam zone (10), the first work piece part (8) is at least partially transparent to the spectrum of the laser beams (11), that in the region of the second coupling-in zone (13), the second work piece part (7) is at least partially absorbent to the spectrum of the laser beams (11), and that the reflectivity of the two work piece parts (7, 8) is essentially the same for the spectrum of the visible light beams.

8. process for welding work piece parts according to Claim 7, **characterised in that** the laser beam source (1) is positioned in such a way that the laser beams (11) may possibly be oriented onto the two work piece parts (7, 8) by means of an optical system (3) that the first and second coupling-in zone (12, 13) essentially lies on the straight line formed through the laser beams (11), in particular approximately perpendicular to this straight line, whereby preferably the laser beam source (1) or the optical system (3) for the laser beam source (1) and the work piece parts (7, 8) are moved relative to one another, in particular through a programmable movement such as that performed by means of a robot or a multiple-axis handling device, in such a manner that an elongated, possibly freely oriented, seam zone (10), which is arranged three-dimensionally spatially and in individual locations possibly in sectors (28) in the work piece, is generated.

9. Process for welding work piece parts according to Claim 7 or 8, **characterised in that** during or after the heating and melting of the seam zone (10) through the laser beams (11), a pressure is applied in the region of the seam zone (10), in particular until the seam, zone (10) cools down, that preferably the pressure is applied onto the work piece parts (7, 8) adjacent to the focus of the laser beams (11), and in particular enabling the laser beams (11) to track it, or is possibly applied outside the guidance of the laser beams (11), and that it is further preferred that the pressure is applied via hydraulic, pneumatic or roll-type (16) holding-down elements, which may possibly be transparent to the laser beams (11).

10. Process for welding work piece parts according to Claim 7, 8 or 9, **characterised in that** the operating parameters of the laser beam source (1), which is preferably an Nd:YAG laser, are regulated in dependence on the process parameters prevailing in the seam zone (10), such as temperature and/or pressure, and that preferably the work piece is thermally tempered after welding to reduce welding stresses.

## Revendications

1. Pièce, en particulier boîtier (6) pour un commutateur électrique, comportant deux parties de pièce (7,8) en matière synthétique, avantageusement une matière synthétique thermoplastique, soudées ensemble par rayons laser (11) le long d'une zone de joint (10) et possédant, au moins dans des zones partielles, des coefficients de transmission ainsi que d'absorption différents les uns des autres pour le spectre des rayons laser (11), une première partie de pièce (8) étant réalisée dans la région d'une première zone de contact (12), dans laquelle les rayons laser (11) rencontrent la première partie de pièce (8), jusqu'à la zone de joint (10) de façon à transmettre les rayons laser (11), grâce à quoi une partie des rayons laser (11) traversent la première partie de pièce (8) et peuvent pénétrer, au niveau d'une seconde zone de contact (13), dans la seconde partie de pièce (7), et l'autre seconde partie de pièce (7) étant réalisée dans la région de la zone de joint (10) au niveau de la seconde zone de contact (13) de façon à absorber les rayons laser (11), **caractérisée en ce que** le coefficient de transmission de la première partie de pièce (8) et le coefficient d'absorption de la seconde partie de pièce (7) sont réglés par la proportion d'additifs dans la matière synthétique, par exemple des fibres de verre ou des pigments colorés, en particulier des pigments colorés noirs, de sorte que la première partie de pièce (8), dans la région de la première zone de contact (12) jusqu'à la zone de joint (10), est susceptible de transmettre, au moins partiellement, le spectre des rayons laser (11), **en ce que** la seconde partie de pièce (7), dans la région de la seconde zone de contact (13), est au moins partiellement absorbante pour le spectre des rayons laser (11), et **en ce que** la réflectivité des deux parties de pièce (7,8) est sensiblement identique pour le spectre des rayons lumineux visibles.

2. Pièce selon la revendication 1,
**caractérisée en ce que** la seconde partie de pièce (7) est réalisée de façon absorbante à la surface de la seconde zone de contact (13) et/ou la longueur d'onde pour les rayons laser (11) est choisie de sorte que les rayons laser (11) pénètrent uniquement d'une faible distance, avantageusement de quelques µm, dans la seconde partie de pièce (7), de sorte que la zone d'absorption (14) pour les rayons laser (11) dans la seconde partie de pièce (7) est réalisée de façon superficielle.

3. Pièce selon la revendication 1 ou 2,
**caractérisée en ce que** les deux parties de pièce (7,8) sont constituées de la même matière synthétique, par exemple du polyamide ou un copolymère styrène-acrylo-nitrile, avantageusement, pour la matière synthétique absorbante, une pigmentation par 1% à 2% de colorant et, pour la matière synthétique transmissive, une pigmentation plus faible, le cas échéant aucune pigmentation, étant mises en oeuvre et, encore avantageusement, la matière synthétique pour les deux parties de pièce (7,8) étant généralement opaque pour le spectre lumineux visible par l'oeil humain.

4. Pièce selon la revendication 1, 2 ou 3,
**caractérisée en ce que** la première partie de pièce (8) présente une transmission T supérieure à 60%, une absorption A inférieure à 30% et, le cas échéant, une réflectivité R inférieure à 20%, et la seconde partie de pièce (7) présente une absorption A supérieure à 90%, en particulier une transmission T négligeable et, le cas échéant, une réflectivité R inférieure à 10%, à chaque fois relativement aux rayons laser (11) se rencontrant dans les zones de contact (12,13) des parties de pièce (7,8).

5. Pièce selon une des revendications 1 à 4,
**caractérisée en ce que** les parties de pièce (7,8) à relier sont réalisées de sorte que celles-ci présentent, dans la zone de joint (10), un joint chevauchant (9), le cas échéant chevauchant (18) en forme de coin, chevauchant (23) en forme de rainure, chevauchant en forme de décrochement (9,19,21,22) ou chevauchant à l'alignement (17), avantageusement la zone de joint (10) s'étendant suivant un agencement spatial tridimensionnel le long de la liaison des parties de pièce (7,8), et encore avantageusement au moins une partie de la zone de joint (10) se trouvant à l'intérieur de la pièce.

6. Pièce selon une des revendications 1 à 5,
**caractérisée en ce que** les deux parties de pièce (7,8) possèdent des parois (26) qui limitent au moins une partie d'une cavité interne (27), **en ce que**, avantageusement, la zone de joint (10) s'étend en secteurs individuels (28) qui, le cas échéant, sont agencés dans la zone de coins sur les parois (26) ou de passages dans la cavité (27), ou de façon continue le long des surfaces de liaison adjacentes des parois (26), et **en ce que**, encore avantageusement, entre les secteurs individuels (28), les parois (26), pour obtenir une étanchéification de la cavité (27), en particulier contre l'effet de la poussière, sont réalisées en se chevauchant l'une l'autre en ayant des liaisons encliquetables (29) ou des rainures d'étanchéité (24).

7. Procédé pour souder par des rayons laser (11) des parties de pièce (7,8) constituées de matière synthétique, avantageusement d'une matière synthétique thermoplastique, en particulier pour des parties de boîtier pour des commutateurs électriques, selon une des revendications 1 à 6, une première partie de pièce transparente (8) et une seconde partie de pièce absorbante (7) étant reliées ensemble par une zone de joint (10) en une pièce, en ce que les deux parties de pièce (7,8) et la source de rayons laser (1) sont positionnées relativement les unes par rapport à l'autre, le cas échéant au moyen d'une optique (3), de sorte que les rayons laser (11) rencontrent tout d'abord une première zone de contact (12) sur la première partie de pièce (8), une partie des rayons laser (11) traversant la première partie de pièce (8), et en ce que cette partie des rayons laser (11) pénètre ensuite dans la région de la zone de joint (10) au niveau d'une seconde zone de contact (13) dans la seconde partie de pièce (7), la seconde partie de pièce (7) étant réchauffée dans la région de la seconde zone de contact (13), de sorte que les deux parties de pièce (7,8) parviennent, dans la zone de joint (10), dans un état fondu et, par refroidissement ultérieur, une consolidation de la zone de joint (10) étant obtenue, **caractérisé en ce que** les deux parties de pièce (7,8) contiennent, à chaque fois, des additifs, en particulier des pigments colorés, les parties de pièce (7,8) étant réglées à une proportion différente des additifs de sorte que la première partie de pièce (8), dans la région de la première zone de contact (12) jusqu'à la zone de joint (10), peut au moins partiellement transmettre le spectre des rayons laser (11), et que la seconde partie de pièce (7), dans la région de la seconde zone de contact (13), est au moins partiellement absorbante pour le spectre des rayons laser (11), et **en ce que** la réflectivité des deux parties de pièce (7,8) est généralement identique pour le spectre des rayons lumineux visibles.

8. Procédé pour souder des parties de pièce selon la revendication 7,
**caractérisé en ce que** la source de rayons laser (1) est positionnée de sorte que les rayons laser (11) peuvent être orientés, le cas échéant au moyen d'une optique (3), sur les deux parties de pièce (7,8), de sorte que les première et seconde zones de contact (12,13) se trouvent généralement sur la ligne droite formée par les rayons laser (11), en particulier sensiblement perpendiculairement à cette ligne droite, la source de rayons laser (1) ou l'optique (3) pour la source de rayons laser (1) et les parties de pièce (7,8) étant avantageusement déplacées relativement l'une par rapport à l'autre, en particulier par un mouvement programmable, comme au moyen d'un robot ou d'un appareil de manipulation à plusieurs axes, de sorte qu'il est engendré une zone de joint (10) allongée , le cas échéant librement orientable, agencée dans la pièce de façon spatialement tridimensionnelle ainsi que, le cas échéant, par secteur (28) en des emplacements individuels.

9. Procédé pour souder des parties de pièce selon la revendication 7 ou 8,
**caractérisé en ce que**, pendant ou après l'échauffement et la fusion de la zone de joint (10) par les rayons laser (11), un effet de pression dans la région de la zone de joint (10), en particulier jusqu'au refroidissement de la zone de joint (10), est mis en oeuvre, **en ce que**, avantageusement, l'effet de pression est mis en oeuvre de façon voisine au foyer des rayons laser (11) et en particulier en pouvant suivre les rayons laser (11) ou, le cas échéant, à l'extérieur du guidage des rayons laser (11) sur les parties de pièce (7,8), et **en ce que**, encore avantageusement, l'effet de pression est mis en oeuvre par l'intermédiaire de serre-flans hydrauliques, pneumatiques ou du type rouleau (16), qui peuvent être le cas échéant transparents pour les rayons laser (11).

10. Procédé pour souder des parties de pièce selon la revendication 7, 8 ou 9,
**caractérisé en ce que** les paramètres de fonctionnement de la source de rayons laser (1), pour laquelle il s'agit avantageusement d'un laser Nd:YAG, sont réglés de façon dépendant des paramètres de procédé régnant dans la zone de joint (10), comme la température et/ou la pression, et **en ce que**, avantageusement, la pièce, après le soudage, est traitée thermiquement pour éliminer les contraintes de soudure.

Fig.1

# Fig. 2

# Fig. 3

# Fig. 4

# Fig. 5

Fig.6

Fig.7

Fig. 8

Fig.10

Fig. 9